(19) **Europäisches Patentamt**
**European Patent Office**
**Office européen des brevets**

(11) **EP 4 576 071 A1**

(12) **EUROPEAN PATENT APPLICATION**

(43) Date of publication:
**25.06.2025 Bulletin 2025/26**

(21) Application number: **23218098.4**

(22) Date of filing: **19.12.2023**

(51) International Patent Classification (IPC):
**G10L 19/008** (2013.01)    **H04S 1/00** (2006.01)
**H04S 3/00** (2006.01)    **H04S 7/00** (2006.01)
**G06N 3/02** (2006.01)

(52) Cooperative Patent Classification (CPC):
**G10L 19/008; G06N 3/045; H04S 1/007;**
**H04S 3/008; H04S 7/30;** G06N 3/02

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Koninklijke Philips N.V.**
**5656 AG Eindhoven (NL)**

(72) Inventors:
• **SCHUIJERS, Erik Gosuinus Petrus**
  **Eindhoven (NL)**
• **KECHICHIAN, Patrick**
  **Eindhoven (NL)**
• **RAVI, Akshaya**
  **Eindhoven (NL)**

(74) Representative: **Philips Intellectual Property &**
**Standards**
**High Tech Campus 52**
**5656 AG Eindhoven (NL)**

(54) **GENERATION OF MULTICHANNEL AUDIO SIGNAL**

(57)    An apparatus comprises a receiver (101) arranged to receive a frequency domain audio signal and a decorrelator (107) therefrom generates a frequency domain decorrelated signal. An envelope compensator (109) generates a compensated frequency domain decorrelated signal by applying a time domain envelope compensation to the decorrelated signal to reduce a difference between the time domain envelope of the frequency domain audio signal and the time domain envelope of the frequency domain decorrelated signal.

The envelope compensator (109) comprises at least one trained artificial neural network having input values determined from at least one of the frequency domain audio signal and the frequency domain audio signal and generating time domain envelope compensation data for the time domain envelope compensation. An output generator (105) generates the multichannel audio signal by upmixing from the frequency domain audio signal and the frequency domain decorrelated signal.

**FIG. 1**

**Description**

FIELD OF THE INVENTION

The invention relates to generation of multichannel audio signals and in particular, but not exclusively, to generation of stereo signals from upmixing of a mono downmix signal.

BACKGROUND OF THE INVENTION

Spatial audio applications have become numerous and widespread and increasingly form at least part of many audiovisual experiences. Indeed, new and improved spatial experiences and applications are continuously being developed which results in increased demands on the audio processing and rendering.

For example, in recent years, Virtual Reality (VR) and Augmented Reality (AR) have received increasing interest, and a number of implementations and applications are reaching the consumer market. Indeed, equipment is being developed for both rendering the experience as well as for capturing or recording suitable data for such applications. For example, relatively low-cost equipment is being developed for allowing gaming consoles to provide a full VR experience. It is expected that this trend will continue and indeed will increase in speed with the market for VR and AR reaching a substantial size within a short time scale. In the audio domain, a prominent field explores the reproduction and synthesis of realistic and natural spatial audio. The ideal aim is to produce natural audio sources such that the user cannot recognize the difference between a synthetic or an original one.

A lot of research and development effort has focused on providing efficient and high-quality audio encoding and audio decoding for spatial audio. A frequently used spatial audio representation is multichannel audio representations, including stereo representation, and efficient encoding of such multichannel audio based on downmixing multichannel audio signals to downmix channels with fewer channels have been developed. One of the main advances in low bit-rate audio coding has been the use of parametric multichannel coding where a downmix signal is generated together with parametric data that can be used to upmix the downmix signal to recreate the multichannel audio signal.

In particular, instead of traditional mid-side or intensity coding, parametric multichannel audio coding uses a downmix of a multichannel input signal to a lower number of channels (e.g. two to one) and multichannel image (stereo) parameters are extracted. Then the downmix signal is encoded using a more traditional audio coder (e.g. a mono audio encoder). The data of the downmix is combined with the encoded multichannel parameter data to generate a suitable audio bitstream. This bitstream is then transmitted to the decoder, where the process is inverted. First the downmix audio signal is decoded, after which the multichannel audio signal is reconstructed guided by the encoded multichannel image upmix parameters.

An example of stereo coding is described in E. Schuijers, W. Oomen, B. den Brinker, J. Breebaart, "Advances in Parametric Coding for High-Quality Audio", 114th AES Convention, Amsterdam, The Netherlands, 2003, Preprint 5852. In the described approach, the downmixed mono signal is parametrized by exploiting the natural separation of the signal into three components (objects): transients, sinusoids, and noise. In E. Schuijers, J. Breebaart, H. Pumhagen, J. Engdegård, "Low Complexity Parametric Stereo Coding", 116th AES, Berlin, Germany, 2004, Preprint 6073 more details are provided describing how parametric stereo was realized with a low (decoder) complexity when combining it with Spectral Band Replication (SBR).

In the described approaches, the decoding side multi-channel regeneration is based on the use of a so-called de-correlation process. The de-correlation process generates a decorrelated helper signal from the downmix signal, i.e. from the monaural signal of parametric stereo. The decorrelated signal is in particular used to control and reconstruct the coherence (stereo width in case of stereo) between/among the different channels during the upmix process. In the stereo reconstruction process, both the monaural signal and the decorrelated helper signal are used to generate the upmixed stereo signal based on the upmix parameters. Specifically, the two signals may be multiplied by a time- and frequency-dependent 2x2 matrix having coefficients determined from the upmix parameters to provide the output stereo signal.

However, although Parametric Stereo (PS) and similar downmix encoding/ decoding approaches were a leap forward from traditional stereo and multichannel coding, the approach is not optimal in all scenarios. In particular, known approaches tend to introduce some distortion, changes, artefacts etc. that may introduce differences between the (original) multichannel audio signal input to the encoder and the multichannel audio signal recreated at the decoder. Typically, the audio quality may be degraded and imperfect recreation of the multichannel occurs. Further, the data rate may still be higher than desired and/or the complexity/ resource usage of the involved processing may be higher than preferred. In particular, it is challenging to generate a decorrelated helper signal that results in optimum audio quality of the upmixed multichannel signal. For example, it is known that the decorrelation process often times smears out transients over time and may introduce additional artifacts such as post-echoes due to the filter characteristics of the decorrelator.

Hence, an improved approach would be advantageous. In particular, an approach allowing increased flexibility, improved adaptability, an improved performance, increased audio quality, improved audio quality to data rate trade-off, reduced complexity and/or resource usage, reduced computational load, facilitated implementation and/or an improved spatial audio experience would be advantageous.

SUMMARY OF THE INVENTION

Accordingly, the invention seeks to preferably mitigate, alleviate or eliminate one or more of the above mentioned disadvantages singly or in any combination.

According to an aspect of the invention there is provided an apparatus for generating a multichannel audio signal, the apparatus comprising: a receiver arranged to receive a frequency domain audio signal; a decorrelator arranged to generate a frequency domain decorrelated signal by applying a decorrelation to the frequency domain audio signal; an envelope compensator arranged to generate an envelope compensated frequency domain decorrelated signal by applying a time domain envelope compensation to the frequency domain decorrelated signal, the time domain envelope compensation reducing a difference between a time domain envelope of the frequency domain audio signal and a time domain envelope of the frequency domain decorrelated signal, the envelope compensator comprising at least one trained artificial neural network having input values determined from at least one of the frequency domain audio signal and the frequency domain decorrelated signal and generating time domain envelope compensation data for the time domain envelope compensation; and an output generator arranged to generate the multichannel audio signal by upmixing from the frequency domain audio signal and the envelope compensated frequency domain decorrelated signal.

The approach may provide an improved audio experience in many embodiments. For many signals and scenarios, the approach may provide improved generation/ reconstruction of a multichannel audio signal with an improved perceived audio quality. The approach may provide a particularly advantageous arrangement which may in many embodiments and scenarios allow a facilitated and/or improved possibility of utilizing artificial neural networks in audio processing, including typically audio encoding and/or decoding. The approach may allow an advantageous employment of artificial neural network(s) in generating a multichannel audio signal from a downmix audio signal.

The approach may provide an efficient implementation and may in many embodiments allow a reduced complexity and/or resource usage.

The approach may provide a particularly efficient and high performance approach for improving and increasing the correspondence of properties between the received audio signal and an auxiliary decorrelated signal used to generate the multichannel audio signal. In particular, the approach may effectively mitigate and reduce the impact of generated decorrelated signals not having ideal temporal properties, including in particular errors or deviations in the signal level of the decorrelated signal.

The frequency domain audio signal may in many embodiments be a mono audio signal and/or the multichannel audio signal may be a stereo audio signal. The receiver may in many embodiments further receive upmix parameters and the upmixing may be in dependence on the upmix parameters.

The upmix parametric data may comprise parameter (values) relating properties of the downmix signal to properties of the multichannel audio signal. The upmix parametric data may comprise data being indicative of relative properties between channels of the multichannel audio signal. The upmix parametric data may comprise data being indicative of differences in properties between channels of the multichannel audio signal. The upmix parametric data may comprise data being perceptually relevant for the synthesis of the multichannel audio signal. The properties may for example be differences in phase and/or intensity and/or timing and/or correlation. The upmix parametric data may in some embodiments and scenarios represent abstract properties not directly understandable by a human person/expert (but may typically facilitate a better reconstruction/lower data rate etc.). The upmix parametric data may comprise data including at least one of interchannel intensity differences, interchannel timing differences, interchannel correlations and/or interchannel phase differences for channels of the multichannel audio signal.

The artificial neural network(s) may be a trained artificial neural network(s) trained by training data including training downmix audio signals and training upmix parametric data generated from training multichannel audio signals; the training employing a cost function comparing the training multichannel audio signals to upmixed multi-channel signals generated by the audio apparatus from the training downmix signals and from the envelope compensated frequency domain decorrelated signal. The artificial neural network(s) may be a trained artificial neural network(s) trained by training data including training data representing a range of relevant audio sources including recording of videos, movies, telecommunications, etc.

The artificial neural network (s) may be a trained artificial neural network(s) trained by training data having training input data comprising training audio signals, and using a cost function including a contribution indicative of a difference between generated multichannel audio signals and training input multichannel audio signal, and/or a cost function indicative of a difference between time domain envelope properties for the frequency domain audio signal and the compensated frequency domain decorrelated signal.

The generator may be arranged to generate the multichannel audio signal by applying a matrix multiplication to the compensated frequency domain decorrelated signal and the frequency domain audio signal with the coefficients of the matrix being determined as a function of parameters of the upmix parametric data. The matrix may be time- and frequency-dependent.

The audio apparatus may specifically be an audio decoder apparatus.

The receiver may receive the frequency domain audio signal from any suitable internal or external source. For example, the audio apparatus may include a bitstream receiver for receiving a bitstream comprising a time domain audio signal, and specifically a mono-signal, which it may extract and transform to the frequency domain to generate the frequency domain audio signal which may then be forwarded to the receiver arranged to receive the frequency domain audio signal. The bitstream receiver may receive further data in the bitstream, such as the upmix data, positional information, acoustic environment data etc..

The trained artificial neural network may comprise input nodes receiving samples of the frequency domain audio signal and/or data values/features derived therefrom. The trained artificial neural network may comprise input nodes receiving samples of the frequency domain decorrelated signal and/or data values/features derived therefrom. The trained artificial neural network may comprise output nodes generating samples of the compensated frequency domain decorrelated signal and/or may generate data from which the compensated frequency domain decorrelated signal can be generated (e.g. using an analytical/predetermined function and/or not employing an artificial neural network).

According to an optional feature of the invention, the at least one trained artificial neural network comprises a trained artificial neural network arranged to receive input values determined from the frequency domain audio signal and to generate time domain envelope compensation data indicative of/representing/being a time domain envelope estimate(/signal) for the frequency domain audio signal, the envelope compensator being arranged to generate the envelope compensated frequency domain decorrelated signal in dependence on the time domain envelope estimate(/signal) for the frequency domain audio signal.

This may provide a particularly efficient and high performance operation in many scenarios, and may typically result in substantially improved audio quality of the generated multichannel audio signal.

In some embodiments, the time domain envelope estimate may be determined as a signal which may be a time domain signal that e.g., represents the time domain samples of the envelope. In other cases, the time domain envelope estimate signal may be determined and represented by frequency domain samples of the signal. In some embodiments, the time domain envelope estimate may alternatively or additionally be represented by one or more parameters/characteristics/properties of the time domain envelope. For example, the time domain envelope may be represented by features or parameters including e.g., average, medium, maximum, or minimum levels, measures of variation such as a median or average frequency etc.

The envelope compensator may be arranged to determine a time domain envelope estimate (signal) for the frequency domain audio signal using an artificial neural network; compare a time domain envelope estimate (signal) for the frequency domain decorrelated signal to the time domain envelope estimate (signal) for the frequency domain audio signal; and compensate the frequency domain decorrelated signal in dependence on the comparison/difference between these.

According to an optional feature of the invention, the at least one trained artificial neural network comprises a trained artificial neural network arranged to receive input values determined from the frequency domain decorrelated signal and to generate time domain envelope compensation data indicative of/representing/being a time domain envelope estimate(/signal) for the frequency domain decorrelated signal, the envelope compensator being arranged to generate the envelope compensated frequency domain decorrelated signal in dependence on the time domain envelope estimate(/signal) for the frequency domain decorrelated signal.

This may provide a particularly efficient implementation and/or improved performance. In many scenarios, improved audio quality of the multichannel output audio signal may be achieved.

The envelope compensator may be arranged to determine a time domain envelope estimate (signal) for the frequency domain decorrelated signal using an artificial neural network; compare the time domain envelope estimate (signal) for the frequency domain decorrelated signal to a time domain envelope estimate (signal) for the frequency domain audio signal; and compensate the frequency domain decorrelated signal in dependence on the comparison/difference between these.

In some embodiments, the time domain envelope estimate may be determined as a signal which may be a time domain signal that e.g., represents the time domain samples of the envelope. In other cases, the time domain envelope estimate signal may be determined and represented by frequency domain samples of the signal. In some embodiments, the time domain envelope estimate may alternatively or additionally be represented by one or more parameters/characteristics/properties of the time domain envelope. For example, the time domain envelope may be represented by features or parameters including e.g., average, medium, maximum, or minimum levels, measures of variation such as a median or average frequency etc.

According to an optional feature of the invention, the envelope compensator comprises: a first envelope estimator arranged to determine a time domain envelope estimate(/signal) for the frequency domain audio signal; a second envelope estimator arranged to determine a time domain envelope estimate(/signal) for the frequency domain decorrelated signal; and wherein the at least one trained artificial neural network comprises a trained artificial neural network arranged to receive input values determined from the time domain envelope estimate(/signal) for the frequency domain audio signal and input values determined from the time domain envelope estimate(signal) for the frequency domain decorrelated signal, and to generate time domain envelope compensation data comprising (frequency or time domain) samples of the envelope compensated frequency domain decorrelated signal.

This may provide a particularly efficient implementation and/or improved performance. In many scenarios, improved audio quality of the multichannel output audio signal may be achieved.

In many scenarios, a particularly advantageous operation and performance is achieved by the first and/or second envelope estimator being implemented using trained artificial neural networks as previously described.

In some embodiments, the time domain envelope estimate may be determined as a signal which may be a time domain signal that e.g., represents the time domain samples of the envelope. In other cases, the time domain envelope estimate signal may be determined and represented by frequency domain samples of the signal. In some embodiments, the time domain envelope estimate may alternatively or additionally be represented by one or more parameters/characteristics/properties of the time domain envelope. For example, the time domain envelope may be represented by features or parameters including e.g., average, medium, maximum, or minimum levels, measures of variation such as a median or average frequency etc.

According to an optional feature of the invention, at least one of the at least one trained artificial neural networks is arranged to receive input values determined from the frequency domain audio signal and input values determined from the frequency domain decorrelated signal and to generate time domain envelope compensation data to comprise (frequency or time domain) samples of the envelope compensated frequency domain decorrelated signal.

This may provide a particularly efficient implementation and/or improved performance. In many scenarios, improved audio quality of the multichannel output audio signal may be achieved. In many scenarios, this may provide a highly computationally efficient implementation that can provide a highly accurate compensation for a large range of audio signals.

The trained artificial neural network may specifically include input nodes for receiving samples of the frequency domain audio signal and the frequency domain decorrelated signal.

According to an optional feature of the invention, the at least one trained artificial neural network is arranged to generate time domain envelope compensation data for a first time interval based on input values determined from samples of at least one of the frequency domain audio signal and the frequency domain decorrelated signal in a second time interval, the second time interval having a duration no less than twice the first time interval.

This may provide a particularly efficient implementation and/or improved performance. In many scenarios, improved audio quality of the multichannel output audio signal may be achieved.

The trained artificial neural network may comprise input nodes for receiving samples of the frequency domain audio signal and/or the frequency domain decorrelated signal in a time interval having a duration exceeding a duration of a time interval for which output nodes of the trained artificial neural network generates data of the time domain envelope compensation data.

The data of the time domain envelope compensation data may be samples of the compensated frequency domain decorrelated signal.

In some embodiments, the envelope compensator may be arranged to generate frequency samples of the envelope compensated frequency domain decorrelated signal for a first time interval based on an output of the trained artificial neural network when having input values determined from samples of at least one of the frequency domain audio signal and the frequency domain audio signal in a second time interval, the second time interval having a duration no less than twice the first time interval.

According to an optional feature of the invention, the envelope compensator comprises: a first feature determiner arranged to determine a first set of features from the frequency domain decorrelated signal; a second feature determiner arranged to determine a second set of features from the frequency domain audio signal; wherein the at least one trained artificial neural network comprises a trained artificial neural network arranged to generate a set of feature scale factors, the artificial neural network having inputs including the first set of features and the second set of features; and the envelope compensator further comprises: a circuit arranged to apply the scale factors to the first set of features to generate a first set of compensated features; and a feature decoder for generating the envelope compensated frequency domain decorrelated signal from the first set of compensated features.

This may provide a particularly efficient implementation and/or improved performance. In many scenarios, improved audio quality of the multichannel output audio signal may be achieved. The arrangement, and in particular the scaling being performed in the feature domain rather than in the signal domain based on artificial neural network based determination of the feature scaling, may provide a highly advantageous operation and performance in many embodiments and scenarios. It has been found to be not only computationally highly efficient but to also result in a substantially improved audio quality for the multichannel audio signal for many signals.

The first and/or second set of features may be learned by the respective artificial neural networks for the frequency domain audio signal and frequency domain decorrelator signal. The artificial neural networks may learn time domain envelope information but in the frequency domain. This means that the features may not always be readily interpretable and may include features learned jointly across frequency bands and time (spectrotemporal).

According to an optional feature of the invention, the feature decoder comprises a trained artificial neural network having input nodes receiving the first set of compensated features and output nodes providing samples of the envelope compensated frequency domain decorrelated signal.

This may provide a particularly efficient implementation and/or improved performance in many scenarios.

According to an optional feature of the invention, the first feature determinator comprises an artificial neural network having input nodes receiving samples of the frequency domain decorrelated signal and output nodes providing the first set of features.

This may provide a particularly efficient implementation and/or improved performance in many scenarios.

According to an optional feature of the invention, the second feature determinator comprises an artificial neural network having input nodes receiving samples of the frequency domain audio signal and output nodes providing the second set of features.

This may provide a particularly efficient implementation and/or improved performance in many scenarios.

According to an optional feature of the invention, the at least one artificial neural network is trained using training data comprising a number of training frequency domain audio signals and a cost function dependent on a difference measure between time domain envelopes of the training frequency domain audio signals and time domain envelopes for compensated frequency domain decorrelated signals generated for the training frequency domain audio signals.

This may provide a particularly efficient implementation and/or improved performance. In many scenarios, improved audio quality of the multichannel output audio signal may be achieved. The envelope compensator may be highly efficiently trained to provide improved envelope compensation based on such a training process.

According to an optional feature of the invention, at least one trained artificial neural network comprises an input convolutional layer receiving samples of the frequency domain audio signal and the frequency domain decorrelated signal and at least one fully connected hidden layer.

This may provide a particularly advantageous and efficient envelope compensation.

According to an optional feature of the invention, the envelope compensator is arranged to generate the envelope compensated frequency domain decorrelated signal by applying the time domain envelope compensation to only a subset of higher frequency subbands of the frequency domain decorrelated signal.

This may provide a particularly efficient implementation and/or improved performance in many scenarios.

According to an aspect of the invention, there is provided a method of generating a multichannel audio signal, the method comprising: receiving a frequency domain audio signal; generating a frequency domain decorrelated signal by applying a decorrelation to the frequency domain audio signal; generating an envelope compensated frequency domain decorrelated signal by applying a time domain envelope compensation to the frequency domain decorrelated signal, the time domain envelope compensation reducing a difference between a time domain envelope of the frequency domain audio signal and a time domain envelope of the frequency domain decorrelated signal, the time domain envelope compensation including at least one trained artificial neural network having input values determined from at least one of the frequency domain audio signal and the frequency domain decorrelated signal and generating time domain envelope compensation data for the time domain envelope compensation; and generating the multichannel audio signal by upmixing from the frequency domain audio signal and the envelope compensated frequency domain decorrelated signal.

These and other aspects, features and advantages of the invention will be apparent from and elucidated with reference to the embodiment(s) described hereinafter.

BRIEF DESCRIPTION OF THE DRAWINGS

Embodiments of the invention will be described, by way of example only, with reference to the drawings, in which

FIG. 1 illustrates some elements of an example of an audio apparatus in accordance with some embodiments of the invention;

FIG. 2 illustrates some elements of an example of a time to frequency converter for an audio apparatus in accordance with some embodiments of the invention;

FIG. 3 illustrates an example of a structure of an artificial neural network;

FIG. 4 illustrates an example of a node of an artificial neural network;

FIG. 5 illustrates some elements of an example of an envelope compensator for an audio apparatus in accordance with some embodiments of the invention;

FIG. 6 illustrates some elements of an example of an envelope compensator for an audio apparatus in accordance with some embodiments of the invention;

FIG. 7 illustrates examples of an audio signal and a decorrelated signal generated from the audio signal;

FIG. 8 illustrates some elements of an example of an envelope compensator for an audio apparatus in accordance with some embodiments of the invention;

FIG. 9 illustrates some elements of an example of an envelope compensator for an audio apparatus in accordance with some embodiments of the invention;

FIG. 10 illustrates some elements of an example of an audio apparatus in accordance with some embodiments of the invention;

FIG. 11 illustrates an example of elements of an arrangement for training a neural network;

FIG. 12 illustrates some elements of a possible arrangement of a processor for implementing elements of an audio apparatus in accordance with some embodiments of the invention.

## DETAILED DESCRIPTION OF SOME EMBODIMENTS OF THE INVENTION

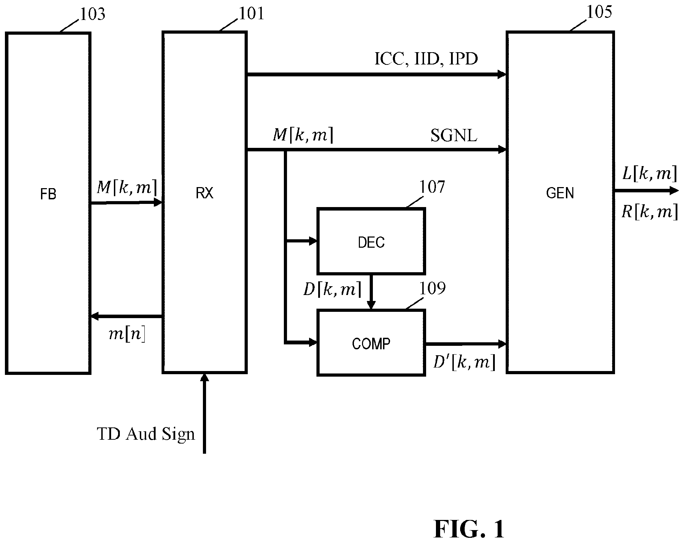

FIG. 1 illustrates some elements of an audio apparatus arranged to generate a multichannel audio signal.

The audio apparatus comprises a receiver 101 which is arranged to receive a data signal/ bitstream comprising an audio signal which specifically is a downmix audio signal being a downmix of a multichannel audio signal which is recreated/generated by the audio apparatus. The following description will focus on a case where the multichannel audio signal is a stereo signal and the downmix signal is a mono signal, but it will be appreciated that the described approach and principles are equally applicable to the multichannel audio signal having more than two channels and to the downmix signal having more than a single channel (albeit fewer channels than the multichannel audio signal).

The received audio signal is a frequency domain audio signal and in some embodiments the frequency domain audio signal is directly received from a remote source which may generate a bitstream comprising a frequency representation of the audio signal. In other embodiments, the remote source may generate a time domain representation of the audio signal and a local frequency transformer may be arranged to generate a (time-)frequency representation of the time domain representation. Thus, in some embodiments, the receiver 101 may receive the frequency domain audio signal from an internal source, such as an internal time-to-frequency domain transformer.

In particular, in the example of FIG. 1, the audio apparatus comprises a filter bank 103 which is arranged to generate a frequency subband representation of a received time domain downmix audio signal. Typically, the audio apparatus may comprise a filter bank 103 that is applied to the audio signal such that it is divided into frequency subbands.

The filter bank may be Quadrature Mirror Filter (QMF) bank or may e.g. be implemented by a Fast Fourier Transform (FFT), but it will be appreciated that many other filter banks and approaches for dividing an audio signal into a plurality of subband signals are known and may be used. The filterbank may specifically be a complex-valued pseudo QMF bank, resulting in e.g. 32 or 64 complex-valued sub-band signals.

The processing is furthermore typically performed in time segments or time slots. In most embodiments, the audio signal is divided into time intervals/segments with a conversion to the frequency/subband domain by applying e.g. an FFT or QMF filtering to the samples of each signal. For example, each channel of the downmix audio signal may be divided into time segments of e.g. 2048, 1024, or 512 samples. These signals may then be processed to generate samples for e.g. 64, 32 or 16 subbands. Thus, a set of samples may be determined for each subband of the downmix audio signal.

It should be noted that the number of time domain samples is not directly coupled to the number of subbands. Typically, for a so-called critically sampled filterbank of N bands, every N input samples will lead to N sub-band samples (one for every sub-band). An oversampled filterbank will produce more output samples. E.g. for every N input samples, it would generate k*N output samples, i.e., k consecutive samples for every band.

In some embodiments, the subbands are generated to have the same bandwidth but in other embodiments subbands are generated to have different bandwidths, e.g. reflecting the sensitivity of human hearing to different frequencies.

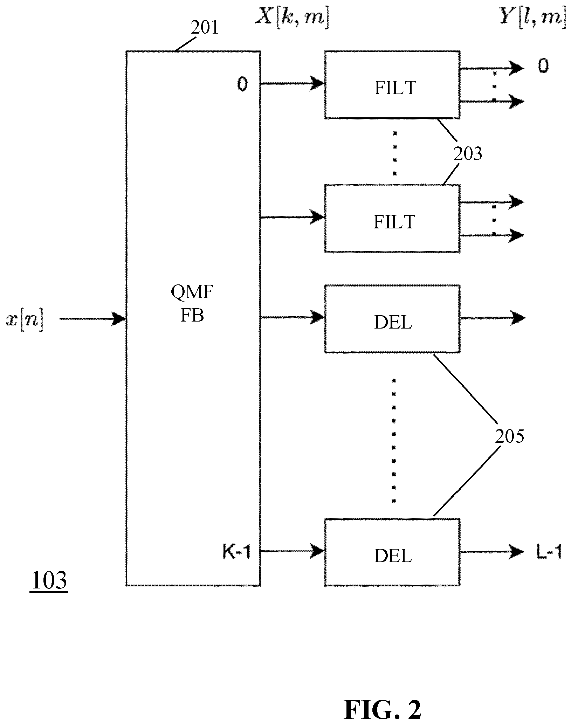

FIG. 2 illustrates an example of an approach where different bandwidths are generated by a hybrid analysis/-synthesis filter bank approach.

In the example, this is realized by a combination of a complex-valued pseudo QMF bank 201 and a small filter bank 203 for the lower frequency bands to realize a higher frequency resolution, as desired for binaural perception of the human auditory system. The result is a hybrid filterbank with logarithmic filter band center-frequency spacings that follow that of human perception similar to equivalent rectangular bandwidths (ERBs). In order to compensate for the delay of the filtering by the small filter bank 203, a delay 205 is introduced for higher frequency subbands.

In the specific example, a time-domain signal $x[n]$ is fed through a downsampled complex-exponential modulated QMF bank with $K$ bands. Each frame of 64 time domain samples $x[n]$ results in one slot of QMF samples $X[k, m]$ with $k = (0, ..., K - 1)$ at slot $m$. The lower slots are then filtered by additional complex-modulated filterbanks splitting the lower bands further. The higher slots are delayed ensuring that the filtered signals of the lower bands are in sync with the higher bands as the filtering introduces a delay. This finally results in a structure where for every 64 time-domain samples $x[n]$, one slot m of hybrid QMF samples $Y[l, m]$ is produced with $l = (0, ..., L - 1)$ at slot m, e.g. with a total number of hybrid bands $M = 77$.

The received data signal further includes upmix parametric data for upmixing the downmix audio signal. The upmix parametric data may specifically be a set of parameters that indicate relationships between the signals of different audio channels of the multichannel audio signal (specifically the stereo signal) and/or between the downmix signal and audio channels of the multichannel audio signal. Typically, the upmix parameters may be indicative of time differences, phase differences, level/intensity differences and/or a measure of similarity, such as correlation. Typically, the upmix parameters are provided on a per time and per frequency basis (time frequency tiles). For example, new parameters may periodically be provided for a set of subbands. Parameters may specifically include Inter-channel phase difference (IPD), Overall phase difference (OPD), Inter-channel correlation (ICC), Channel phase difference (CPD) parameters as known from Parametric Stereo encoding (as well as from higher channel encodings).

Typically, the downmix audio signal is encoded and the receiver 101 may include a decoder function that decodes the downmix audio signal, i.e. the mono signal in the specific example.

The receiver 101 is coupled to a generator 105 which generates the multichannel audio signal from the frequency domain audio signal. In the example, the generator 105 is arranged to generate the multichannel audio signal by (up) mixing of (at least) the frequency domain audio signal and an auxiliary audio signal generated from the frequency domain audio signal. The upmixing is performed in dependence on the parametric upmix data.

The generator 105 may specifically for the stereo case generate the output multichannel audio signal by applying a 2x2 matrix multiplication to the samples of the downmix audio signal and the auxiliary audio signal. The coefficients of the 2x2 matrix are determined from the upmix parameters of the upmix parametric data, typically on a time and frequency band basis. For other upmix operations, such as from a mono or stereo downmix signal to a five channel multichannel audio signal, the generator 105 may apply matrix multiplications with matrices of suitable dimensions.

It will be appreciated that many different approaches of generating such a multichannel audio signal from a downmix audio signal and an auxiliary audio signal, and for determining suitable matrix coefficients from upmix parametric data, will be known to skilled person and that any suitable approach may be used. Specifically, various approaches for Parametric Stereo upmixing that are based on downmix and auxiliary audio signals are well known to the skilled person.

The auxiliary audio signal is generated from the frequency domain audio signal by applying a decorrelation operation/function to the frequency domain audio signal and thus the auxiliary audio signal is a decorrelated signal corresponding to the frequency domain audio signal. It has been found that by generating a decorrelated signal and mixing this with a downmix audio signal, and specifically a mono audio signal for stereo upmixing, an improved quality of the upmix signal is perceived and many decoders have been developed to exploit this. The decorrelated signal may for example be generated by a decorrelator in the form of an all-phase filter that is applied to the downmix audio signal.

Accordingly, the audio apparatus of FIG. 1 comprises a decorrelator 107 which is arranged to generate a frequency domain decorrelated signal by applying a decorrelation function/process to the frequency domain audio signal.

It will be appreciated that many different approaches for generating a frequency domain decorrelated signal from a frequency domain audio signal are known and that any suitable approach may be used without detracting from the invention.

For example, the decorrelator 107 may consist of a filtering of the input signal with a decaying noise sequence not unlike a reverberator. The decay characteristics may be frequency-dependent. As another example, the decorrelator may consist of a bank of all-pass filters that apply appropriate frequency-dependent phase shifts to the signal. Another time-domain approach consists of splitting the signal into overlapping blocks and shuffling them before windowing and resynthesizing them. The latter, however, tends to only work well on random signals such as stationary noise.

However, whereas the use of a decorrelation signal in the upmixing has indeed been found to provide improved audio quality, the audio apparatus of FIG. 1 is arranged to not directly use the generated frequency domain decorrelated signal. Rather, the decorrelator 107 is coupled to an envelope compensator 109 which is arranged to perform a time domain envelope compensation of the frequency domain decorrelated signal to generate an envelope compensated frequency domain decorrelated signal, henceforth for brevity referred to as the compensated frequency domain decorrelated signal. The envelope compensator 109 is coupled to the generator 105 which is fed the compensated frequency domain decorrelated signal which is then used as the auxiliary audio signal for upmixing. Thus, the generator 105 generates the multichannel audio signal by upmixing the frequency domain audio signal and the compensated frequency domain decorrelated signal.

The envelope compensator 109 is arranged to apply a time domain envelope compensation to the frequency domain decorrelated signal. The time domain envelope compensation reduces the envelope difference between the time domain audio signal and the time domain decorrelated signal. Thus, if all signals are converted to the time domain, the envelope of the compensated decorrelated signal will match the envelope of the downmix audio signal more closely than the envelope of the non-compensated decorrelated signal will. In other words, the difference between the time domain envelope of the decorrelated signal at the output of the envelope compensator 109 and the time domain envelope of the downmix audio signal is lower than the time domain envelope of the time domain decorrelated signal at the input of the time domain envelope compensator 109 and the time domain envelope of the downmix audio signal.

The time domain envelope for a signal may specifically be a smooth signal that outlines the extremes of the underlying signal. It is the boundary within which the signal is contained. A known method of deriving the time domain envelope from a signal consists of a wave rectifier, producing the absolute value of the signal, after which a smooth line is extracted that goes through consecutive peaks of the signal. In some cases, the envelope is allowed to move up quickly to be able to follow transients properly, whereas it is set to decay slowly.

The time domain envelope of an audio signal may be time domain signal corresponding to/that would result from a low pass filtering of the signal or of a rectified version of the signal (i.e. of the signal resulting from rectifying the original signal). The low pass filtering may be by an ideal low pass filter, which may have a cut-off frequency of e.g. 5Hz, 10Hz, 20Hz, 50 Hz, or 100Hz. The time domain envelope may also be referred to as the time domain amplitude or the time domain level.

The envelope of an audio signal may reflect the slow variations in the level of the signal and thus remove or filter out the fast/higher variations. The envelope may reflect the (smoothed) signal power/energy level.

The envelope of a signal may be considered a positive, i.e. no zero-crossings, signal that follows the slow-varying amplitude dynamics of the signal. The envelope of a signal may be considered that which results from a (half-or full wave) rectification followed by a low pass filtering (e.g. with a cut off frequency as indicated above. The envelope may be the amplitude of the analytical signal (removing negative frequency terms from the real signal).

The Inventors have realized that an issue with many decorrelation processes is that the decorrelated signal will not have properties that ideally reflect the original downmix audio signal from which it is generated, and that it in particular will not have the same envelope/signal level/ amplitude/power properties. The Inventors have further realized that such effects can be mitigated and reduced by performing a particular application of artificial neural networks.

In the audio apparatus of FIG. 1, a two stage process is employed where a decorrelated signal is first generated from the audio signal and then compensated using a neural network approach. In particular, the generation of the multichannel audio signal is improved by a particular arrangement in which a trained artificial neural network is included in a specific functional block that performs time domain envelope compensation of a generated decorrelation signal that is used for upmixing to generate the multichannel audio signal. The Inventors have realized that a practical implementation and high performance is achieved by a particular structure where a trained artificial neural network is specifically trained to be part of a time domain envelope compensation of a frequency domain decorrelated signal. In particular, the compensation is performed on a frequency domain signal, yet is of a time domain property. The trained artificial neural network is particularly efficient in this situation and in particular can be trained efficiently using relatively low complexity training signals and procedures.

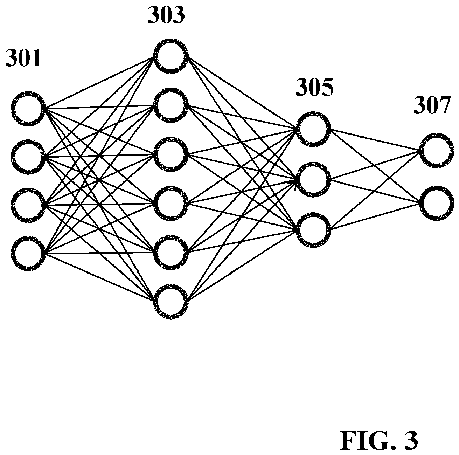

An artificial neural network as used in the described functions may be a network of nodes arranged in layers and with each node holding a node value. FIG. 3 illustrates an example of a section of an artificial neural network.

The node value for a given node may be calculated to include contributions from some or often all nodes of a previous layer of the artificial neural network. Specifically, the node value for a node may be calculated as a weighted summation of the node values of all the nodes output of the previous layer. Typically, a bias may be added and the result may be subjected to an activation function. The activation function provides an essential part of each neuron by typically providing a non-linearity. Such non-linearities and activation functions provides a significant effect in the learning and adaptation process of the neural network. Thus, the node value is generated as a function of the node values of the previous layer.

The artificial neural network may specifically comprise an input layer 301 comprising a plurality of nodes receiving the input data values for the artificial neural network. Thus, the node values for nodes of the input layer may typically directly be the input data values to the artificial neural network and thus may not be calculated from other node values.

The artificial neural network may further comprise none, one, or more hidden layers 303, 305 or processing layers. For each of such layers, the node values are typically generated as a function of the node values of the nodes of the previous layer, and specifically a weighted combination and added bias followed by an activation function (such as a sigmoid, ReLU, or Tanh function may be applied).

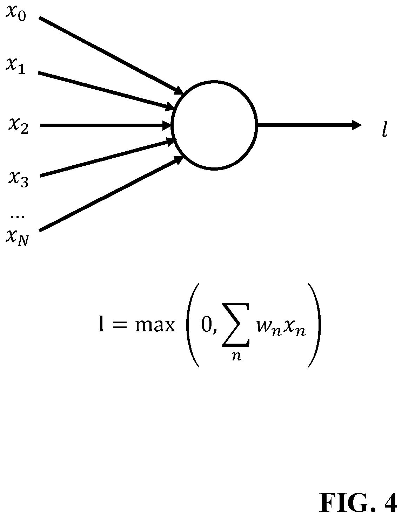

Specifically, as shown in FIG. 4, each node, which may also be referred to as a neuron, may receive input values (from nodes of a previous layer) and therefrom calculate a node value as a function of these values. Often, this includes first generating a value as a linear combination of the input values with each of these weighted by a weight:

$$k = \sum_n w_n x_n$$

where w refers to weights, x refers to the nodes of the previous layer and n is an index referring to the different nodes of the previous layer.

An activation function may then be applied to the resulting combination. For example, the node value I may be determined as:

$$l = f(k)$$

where the function may for example be a Rectified Linear Unit (as described in Xavier Glorot, Antoine Bordes, Yoshua Bengio Proceedings of the Fourteenth International Conference on Artificial Intelligence and Statistics, PMLR 15:315-323, 2011) function:

$$f(k) = ReLU(k) = \max(0, k)$$

Other often used functions include a sigmoid function or a tanh function. In many embodiments, the node output or value may be calculated using a plurality of functions. For example, both a ReLU and Sigmoid function may be combined using an activation function such as:

$$f(k) = ReLU(k) + \sigma(k)$$

Such operations may be performed by each node of the artificial neural network (except for typically the input nodes).

The artificial neural network further comprises an output layer 307 which provides the output from the artificial neural network, i.e. the output data of the artificial neural network is the node values of the output layer. As for the hidden/ processing layers, the output node values are generated by a function of the node values of the previous layer. However, in contrast to the hidden/ processing layers where the node values are typically not accessible or used further, the node values of the output layer are accessible and provide the result of the operation of the artificial neural network.

A number of different networks structures and toolboxes for artificial neural network have been developed and in many embodiments the artificial neural network may be based on adapting and customizing such a network. An example of a network architecture that may be suitable for the applications mentioned above is WaveNet by van den Oord et al which is described in Oord, Aaron van den, Sander Dieleman, Heiga Zen, Karen Simonyan, Oriol Vinyals, Alex Graves, Nal Kalchbrenner, Andrew Senior, and Koray Kavukcuoglu. "Wavenet: A generative model for raw audio." arXiv preprint arXiv: 1609.03499 (2016).

WaveNet is an architecture used for the synthesis of time domain signals using dilated causal convolution, and has been successfully applied to audio signals. For WaveNet the following activation function is commonly used:

$$\mathbf{z} = \tanh\left(W_{f,k} * \mathbf{x}\right) \odot \sigma\left(W_{g,k} * \mathbf{x}\right),$$

where * denotes a convolution operator, $\odot$ denotes an element-wise multiplication operator, $\sigma(\cdot)$ is a sigmoid function, k is the layer index, f and g denote filter and gate, respectively, and W represents the weights of the learned artificial neural network. The filter product of the equation may typically provide a filtering effect with the gating product providing a weighting of the result which may in many cases effectively allow the contribution of the node to be reduced to substantially zero (i.e. it may allow or "cut-off' the node providing a contribution to other nodes thereby providing a "gate" function). In different circumstances, the gate function may result in the output of that node being negligible, whereas in other cases it would contribute substantially to the output. Such a function may substantially assist in allowing the neural network to effectively learn and be trained.

An artificial neural network may in some cases further be arranged to include additional contributions that allow the artificial neural network to be dynamically adapted or customized for a specific desired property or characteristics of the generated output. For example, a set of values may be provided to adapt the artificial neural network. These values may be included by providing a contribution to some nodes of the artificial neural network. These nodes may be specifically input nodes but may typically be nodes of a hidden or processing layer. Such adaptation values may for example be weighted and added as a contribution to the weighted summation/ correlation value for a given node. For example, for WaveNet such adaptation values may be included in the activation function. For example, the output of the activation function may be given as:

$$\mathbf{z} = \tanh\left(W_{f,k} * \mathbf{x} + V_{f,k} * \mathbf{y}\right) \odot \sigma\left(W_{g,k} * \mathbf{x} + V_{g,k} * \mathbf{y}\right)$$

where y is a vector representing the adaptation values and V represents suitable weights for these values.

The above description relates to a neural network approach that may be suitable for many embodiments and implementations. However, it will be appreciated that many other types and structures of neural network may be used. Indeed, many different approaches for generating a neural network have been, and are being, developed including neural networks using complex structures and processes that differ from the ones described above. The approach is not limited to any specific neural network approach and any suitable approach may be used without detracting from the invention.

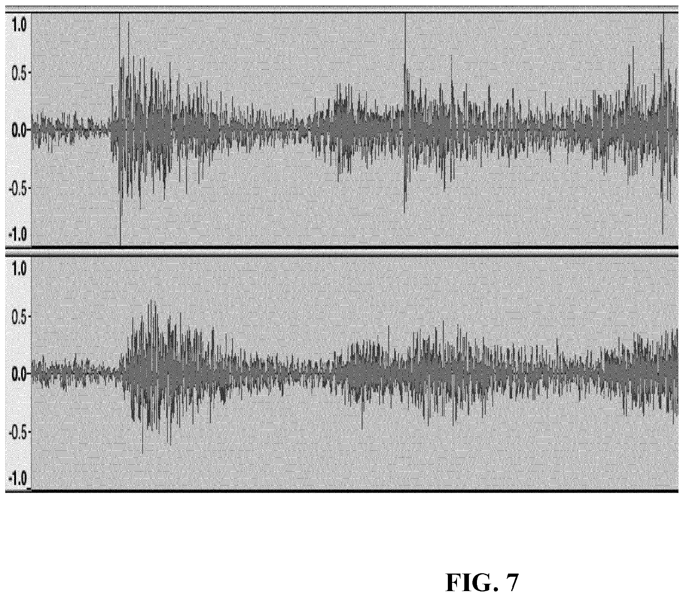

The Inventors have realized that the particular structure and use of an artificial neural network to perform time domain envelope compensation provides a particular efficient operation by addressing a particular issue/effect of many conventional approaches. The Inventors have realized that generating a decorrelated signal by means of e.g. all-pass processing is highly effective for stationary signals but for non-stationary signals, such as e.g. applause signals, the decorrelated signal often does not properly follow the temporal envelope of the received downmix audio signal. An example of a mono downmix audio signal and a generated decorrelation signal is shown in FIG. 7. It can be observed that much of the temporal detail or sharpness is lost in the decorrelated signal. This leads to a reduction in audio quality after upmixing with the downmix audio signal to generate the multichannel audio signal based on the upmix parameters.

A decorrelated signal that more closely follow the temporal envelope of the downmix/mono signal is preferred and in the apparatus of FIG. 1 this is achieved by the inclusion of envelope compensation by the envelope compensator 109.

If the time-domain representation of the mono downmix audio signal is represented as a temporally flat signal $\overline{m}[n]$ modulated by an envelope $e_m[n]$:

$$m[n] = \overline{m}[n] \cdot e_m[n]$$

The time-domain representation of the corresponding generated decorrelated signal $d[n]$ is represented as a temporally flat signal $\overline{d}[n]$ modulated by an envelope $e_d[n]$:

$$d[n] = \overline{d}[n] \cdot e_d[n]$$

It is desired to create a decorrelated signal that is close to:

$$d'[n] = \overline{d}[n] \cdot e_m[n] \qquad (3)$$

One solution could consist of: converting the decorrelated signal back to the time domain by means of a hybrid synthesis filter bank (and converting the downmix audio signal if this is not already available in the time domain), run two envelope estimation algorithms on the time domain downmix audio signal and the time domain decorrelated signal respectively, adjust the temporal envelope of the decorrelated signal accordingly, and convert the adapted decorrelated signal back to the hybrid QMF domain by means of a hybrid analysis bank. However, this operation is computationally costly and will introduce significant processing delay.

To mitigate the problems, a solution operating in the frequency domain, and specifically in a hybrid QMF domain may be employed. The envelope compensator 109 may specifically reinstate the time domain envelope of the downmix audio signal onto the decorrelated signal using a pre-trained artificial neural network. The approach may specifically provide an improved temporal envelope reconstruction with typically in particular a finer temporal resolution. This is realized using an artificial neural network which has been trained by learning how information from the different frequency samples should be combined (both in time and frequency direction) to reconstruct temporally high resolution envelopes.

In some embodiments, the envelope compensator 109 may comprise a single trained artificial neural network that directly generates samples of the compensated decorrelated signal. Thus, the trained artificial neural network may have output nodes that output samples of the compensated decorrelated signal.

Typically, the trained artificial neural network generates frequency samples (specifically complex frequency bin/frequency interval values) of the compensated decorrelated signal and in many embodiments the artificial neural network directly generates the compensated frequency domain decorrelated signal. However, in some embodiments, the artificial neural network may generate time domain samples of the compensated decorrelated signal. In such examples, these time domain samples may possibly be converted to the frequency domain before being provided to the generator 105 for upmixing. In many embodiments, the trained artificial neural network may directly be arranged to generate frequency samples of the compensated frequency domain decorrelated signal which are then fed to the generator 105 for upmixing. Thus, in many embodiments, the trained artificial neural network of the envelope compensator 109 directly generates the frequency domain decorrelated signal.

In many embodiments, the trained artificial neural network directly receives frequency samples of the frequency domain decorrelated signal and the frequency domain audio signal. The trained artificial neural network may accordingly have input nodes that directly receive frequency samples of the frequency domain decorrelated signal and the frequency domain audio signal.

In many embodiments, the input nodes of the trained artificial neural network accordingly receive frequency domain signal samples for the frequency domain audio signal and the frequency domain decorrelated signal and with output nodes that provides frequency samples of the compensated frequency domain decorrelated signal. However, despite the artificial neural network operating in the frequency domain by receiving frequency domain inputs and generating frequency domain outputs, the function of the trained artificial neural network is to reduce the time domain envelope between the input and output decorrelated signals relative to the downmix audio signal. This is achieved by the trained network being trained to provide an output with a compensated time envelope. For example, as will be described in more detail later, the training of the artificial neural network may be based on a cost function that reflects the envelope difference between a time domain signal/representation of the compensated frequency domain decorrelated signal and a time domain signal/representation of the frequency domain audio signal for a large amount of training examples.

In the envelope compensator 109 of FIG. 1, the compensation of the time domain envelope properties can thus be achieved without any conversion to the time domain and while operating only on frequency domain samples. This is achieved by the use of trained artificial neural network which may not only be trained to reflect the time domain differences but also inherently to include properties of the time and frequency domain conversions/relationships.

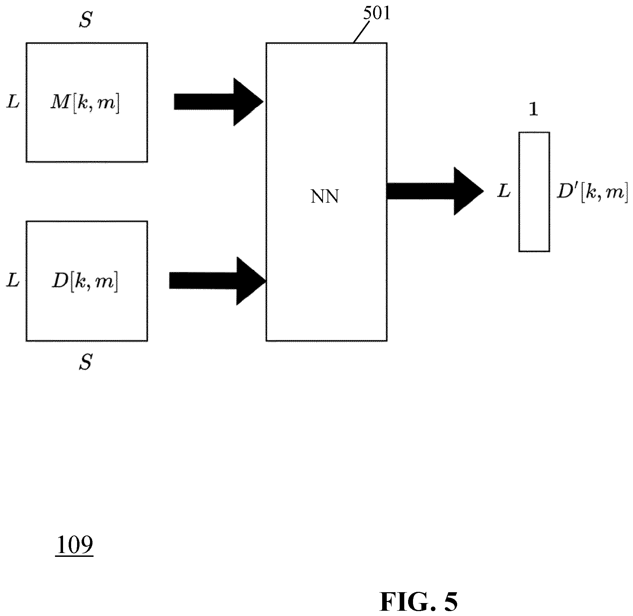

An example of such an approach is illustrated in FIG. 5. In this example, the envelope compensator 109, and the trained artificial neural network thereof, does not explicitly generate intermediate time-domain envelopes or signals. Rather, in this example, the envelope compensator 109 essentially comprises a single trained artificial neural network which comprises a network architecture that is trained to directly provide the frequency samples $D'[k, m]$ of the compensated frequency domain decorrelated signal given the input frequency samples $M[k, m]$ of the frequency domain audio signal and the frequency samples $D[k, m]$, of the frequency domain decorrelated signal.

In some embodiments, the envelope compensator 109 may be arranged to generate a time domain envelope estimate (signals) of at least one of the frequency domain audio signal, and the frequency domain decorrelated signal and then generate the samples for the compensated frequency domain decorrelated signal based on the time domain envelope estimate signal(s).

In such embodiments, one or both of the time domain envelope estimate signal estimators may be implemented as a trained artificial neural network and/or the function determining the samples of the compensated frequency domain decorrelated signal from the time domain envelope estimate signals may be a trained artificial neural network.

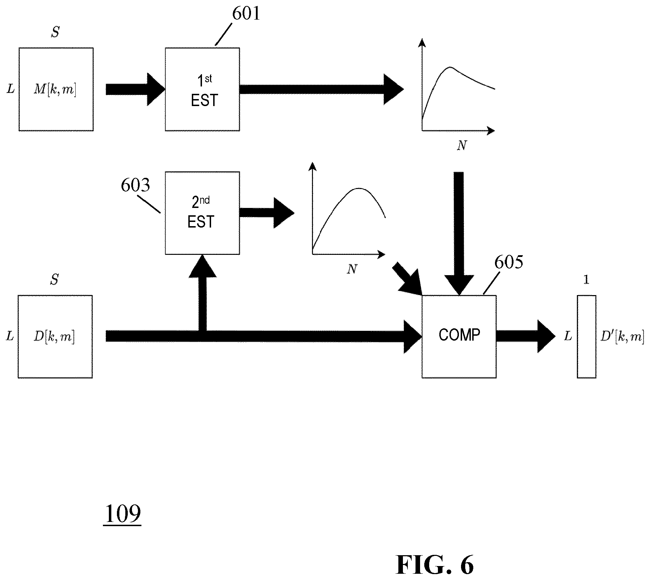

FIG. 6 illustrates an example of an envelope compensator 109 which comprises a first envelope estimator 601 which is arranged to generate a first time domain envelope estimate and a second envelope estimator 603 which is arranged to generate a second time domain envelope estimate where the time domain envelope estimates are dependent on properties of the time domain envelope of the frequency domain audio signal and the frequency domain decorrelated signal respectively.

In the example, the envelope compensator 109 further comprises a compensator 605 arranged to generate the samples of the compensated frequency domain decorrelated signal from the first and/or second time domain envelope estimate, as well as typically the frequency domain decorrelated signal itself.

In many embodiments, the first time domain envelope estimate is a signal representing a time domain envelope estimate signal of the frequency domain audio signal and/or the second time domain envelope estimate is a signal representing a time domain envelope estimate signal of the frequency domain decorrelated signal.

In some embodiments, the first and/or second time domain envelope estimate may be provided in the form of features/parameters dependent on/ reflecting properties or characteristics of the time domain envelope of the frequency domain audio signal and/or the frequency domain decorrelated signal respectively. For example, the time domain envelope may be represented by features or parameters including e.g., average, medium, maximum, minimum levels, measures of variation such as a median or average frequency etc.

In some embodiments, the first envelope estimator 601 is implemented as an artificial neural network, henceforth referred to as the first artificial neural network, which receives the samples of the frequency domain audio signal as inputs and generates a time domain envelope estimate signal of N samples/values providing data representing properties of the time domain envelope of the frequency domain audio signal. The artificial neural network may be trained by training data comprising training frequency domain audio signals with associated determined time domain envelopes and using a cost function that reflects the difference between a measure of time domain envelope of the resulting compensated frequency domain decorrelated signal and a corresponding measure of the time domain envelope of the frequency domain audio signal. Thus, the cost function may include a comparison of the time domain envelopes between the frequency domain audio signal and the compensated frequency domain decorrelated signal.

Alternatively or additionally, in some embodiments, the second envelope estimator 603 may be implemented as an artificial neural network, henceforth referred to as the second artificial neural network, which receives the samples of the frequency domain decorrelated signal as inputs and generates a time domain envelope estimate signal of N samples/-values providing data representing properties of the time domain envelope of the frequency domain decorrelated signal. The artificial neural network may be trained by training data comprising training frequency domain decorrelated signals and frequency domain audio signals with associated determined time domain envelopes for the frequency domain audio signals, and a using a cost function that reflects the difference between a measure of time domain envelope of the resulting compensated frequency domain decorrelated signal and a corresponding measure of the time domain envelope of the frequency domain audio signal. Thus, the cost function may include a comparison of the time domain envelopes between the frequency domain audio signal and the compensated frequency domain decorrelated signal.

In examples where the first and/or the second envelope estimator 601, 603 are implemented as an artificial neural network, the time domain envelope estimate may for example be generated as samples of a time or frequency domain signal corresponding to the time domain envelope. In other embodiments, the time domain envelope estimate may alternatively or additionally be generated as a set of parameters. Such parameters may directly correspond to a specific property of the time domain envelope, such as a frequency, average level, etc. However, in other embodiments, the generated features may be more abstract and not directly relate to a specific feature. Rather, the first and/or the second envelope estimator 601, 603 may be an artificial neural network that is trained to generate features which e.g. allow the compensator 605 (e.g. implemented as an artificial neural network) to generate an improved compensated frequency decorrelated signal. In such cases, the parameters/features that are generated by the first and/or the second envelope estimator 601, 603 may represent abstract or unknown properties which allow the artificial neural networks to provide efficient performance (based on the training).

In other embodiments, the first envelope estimator 601 and/or the second envelope estimator 603 may be implemented as a more conventional, predetermined, and/or analytical function. For example, the first envelope estimator 601 or second envelope estimator 603 may be implemented as a frequency to time domain transformer followed by a low pass filter with a low cutoff frequency to generate a time domain envelope signal. These may then be used as inputs to a trained artificial neural network forming the compensator 605.

It will also be appreciated that the first envelope estimator 601 or second envelope estimator 603 may or may not be implemented as identical or similar circuits. For example, in some embodiments, one of the envelope estimators may be implemented by a trained artificial neural network whereas the other may be implemented as a conventional envelope estimator. In other embodiments, both the first envelope estimator 601 and the second envelope estimator 603 may be implemented as artificial neural networks but with different properties such as e.g. a different number of input or output nodes, different number of layers, different number of nodes in each layer etc.

In some embodiments, the compensator 605 may be implemented as an artificial neural network, henceforth referred to as the compensator artificial neural network, which receives the samples from the first envelope estimator 601 and from the second envelope estimator 603 and which proceeds to generate samples of the compensated frequency domain decorrelated signal. Typically, the compensator artificial neural network also receives samples of the frequency domain decorrelated signal. Thus, the compensator artificial neural network may have input nodes for receiving samples of the frequency domain decorrelated signal as well as the output of the first envelope estimator 601 and the second envelope estimator 603, such as specifically the time domain envelope estimate signals of the frequency domain decorrelated signal and the frequency domain audio signal.

Similarly to the first envelope estimator 601 and second envelope estimator 603 artificial neural networks, the compensator artificial neural network may be trained by a large number of training frequency domain audio signals (and frequency domain decorrelated signals generated therefrom) being input to the envelope compensator 109 and the compensator artificial neural network be trained using a cost function comparing the time domain envelope of the resulting compensated frequency domain decorrelated signal to the time domain envelope of the frequency domain audio signal.

It will be appreciated that the envelope compensator 109 may implement only one or two of the functions of the first envelope estimator 601, the second envelope estimator 603, and the compensator 605 using a trained artificial neural network. In such cases, the training may be performed individually for the given trained artificial neural network while using the intended or nominal implementations of the other functions.

A particular advantageous approach may be achieved by using a first artificial neural network as the first envelope estimator 601, a second artificial neural network as the second envelope estimator 603, and a third artificial neural network as the compensator 605. Such an approach has been found to provide a particularly accurate and fine resolution envelope compensation while at the same time ensuring reduced computational complexity and resource usage. In particular, the combined complexity of three individual artificial neural networks is typically much smaller than that which would be required for a similar accuracy using a single artificial neural network seeking to perform the complete time domain envelope compensation. The particular interaction between the artificial neural networks in the specific structure and with the specific purposes and use of intermediate time domain envelope estimates has been found to be highly effective and provide an accurate envelope compensation.

In many embodiments, the envelope compensator 109 may include a neural network architecture comprising two time-domain envelope estimators and one envelope reinstatement/compensation process with all of these being implemented by neural networks.

As a specific example, for both the frequency domain audio signal and the frequency domain decorrelated signal (e.g. in the hybrid QMF signal domain), an artificial neural network may be employed which is pre-trained such that for a block of complex-valued hybrid QMF samples (L bands by 5 time slots) the two time domain envelope estimation artificial neural networks predict a corresponding time domain envelope of N samples. In some embodiments, the architecture, and indeed the trained coefficients of the temporal envelope estimator artificial neural networks, may be the same/ may be shared. However, in other cases, there may be differences and indeed the artificial neural networks may be trained individually.

The compensator artificial neural network is trained to generate samples of the compensated frequency domain decorrelated signal, and specifically to generate a decorrelated hybrid QMF block $D'[k, m]$ of hybrid QMF samples $D[k, m]$ and the generated time-domain envelopes. In the example of Fig. 6, a single slot (S = 1) is generated, but the artificial neural network may also be configured to generate multiple slots. The artificial neural networks may be trained to generate processed decorrelated hybrid QMF samples such that in the time-domain, the resulting envelope compensated signal resembles: $d[n] = d'[n] \cdot e_m[n]$.

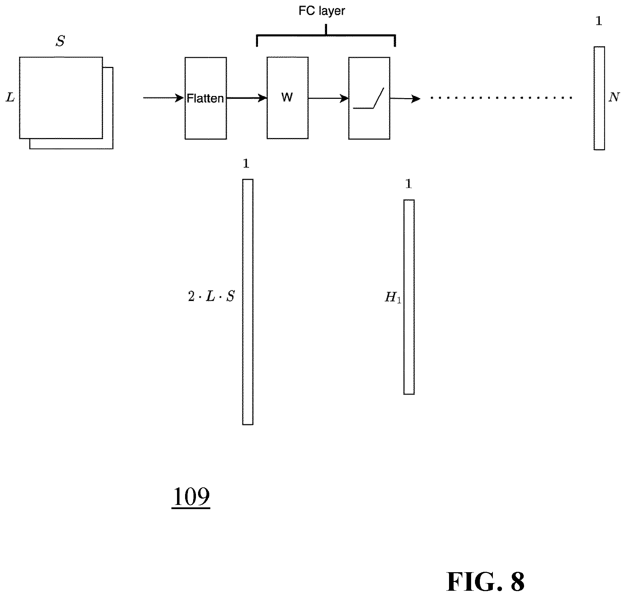

A possible network architecture is the so-called Fully Connected (FC) network architecture as illustrated in FIG. 8. In the example, in a first step, the block of complex-valued hybrid sub-band samples is flattened to form a vector of (real-valued) hybrid sub-band domain samples. Then, in each FC layer, a set of weights and non-linear elements convert the input vector to a vector in the next layer until the final output generates the desired output vector of samples of the compensated frequency domain decorrelated signal.

The processing of the envelope compensator 109, and indeed most or the whole process of generating the multichannel audio signal, is typically performed as segmented processing where a block/time interval of samples of the multichannel audio signal is processed. In particular, the trained artificial neural network(s) may perform block processing where a set/block of output samples are generated from a set/block of input values generated from a set/block of samples of the downmix audio signal and the decorrelated signal.

In some embodiments, the time interval of the compensated frequency domain decorrelated signal for which samples are determined in one operation/block/processing segment is the same as the time interval of the frequency domain audio signal/frequency domain decorrelated signal from which the input values are generated, i.e. in some embodiments, the time interval of the output values matches a time interval of input values. However, in other embodiments, the output values for a given time interval may be determined based on input values of or determined from the input signals (the frequency domain audio signal and frequency domain decorrelated signal) for a larger time interval, and often for a time interval having a duration of no less than 2,3,5,10 times the time interval for which samples are generated.

Specifically, when generating a block of samples of the compensated frequency domain decorrelated signal in one processing segment/operation, the processing and input to the artificial neural networks may be based on input values for a plurality of processing time intervals. For example, when determining the samples of the compensated frequency domain decorrelated signal for the current processing segment, the input values may include the sample values of the frequency domain audio signal and the frequency domain decorrelated signal not only for the time interval of the current processing segment but may also include sample values for the time intervals of the previous and e.g. next processing time intervals. As an example, in the approach of FIG. 6, the input to the artificial neural networks of the first and second envelope estimators 601, 603 include the frequency samples for S processing segments/blocks when generating a compensated frequency domain decorrelated signal for 1 processing segment/block.

In many embodiments, the envelope compensator 109 may be arranged such that the samples of the frequency domain audio signal and/or the frequency domain decorrelated signal are fed directly to the input nodes of the appropriate artificial neural network(s). However, in some embodiments, at least some of the input values to the artificial neural network(s) may not directly be the signal samples but may be derived therefrom. Specifically, some or all of the input nodes may instead of (or possibly as well as) receiving single sample values be provided with features of the signals with the features being determined from the signal samples.

Such feature determination may be performed by a dedicated analytical or predetermined function, such as for example the absolute value of the subband signals or the first order difference between the subband samples to emphasize transient components in the frequency domain audio signal. Predetermined functions may for example include transient detectors, envelope trackers, stationarity indicators using different smoothing filters to detect changes in envelope etc.

In many embodiments, the feature determination may itself be performed by artificial neural network structures or indeed may be implemented as part of the artificial neural network itself. For example, an artificial neural network may include initial 1D or 2D convolutions to pre-process the input signal(s) by a number of feature maps before applying these to FC layers.

In other embodiments, the features determined by the 1D or 2D convolutions may themselves be frequency domain signals with different attributes of the frequency domain (subband) waveforms emphasized or de-emphasized depending on what the network has learned to be necessary in order to perform the envelope compensation correctly. The emphasis/de-emphasis of waveform components such as sharp energy changes may also depend on the inter-frequency correlation of these components, as to their significance in determining the required signal transformations to produce the desired time-domain envelope compensation.

In some embodiments, the envelope compensator 109 may specifically be arranged to perform the envelope compensation in the feature domain rather than in the signal domain. An example of such an approach is illustrated in FIG.

10.

In the example, the envelope compensator 109 comprises a first feature determiner 901 which is arranged to determine a first set of features from the frequency domain decorrelated signal. It further comprises a second feature determiner 903 arranged to determine a second set of features from the frequency domain audio signal.

The first feature determiner 901 and/or the second feature determiner 903 may be implemented as trained artificial neural networks. In other embodiments, they may be implemented as low complexity or reduced artificial neural networks, such as one or few convolutional layers.

Specifically, in the specific example, the frequency domain audio signal M[k,m] and the frequency domain decorrelated signal D[k.m] maybe passed through 1D/2D convolutional layers that extract features for each signal.

In other embodiments, the features may for example be determined using predetermined or analytical functions.

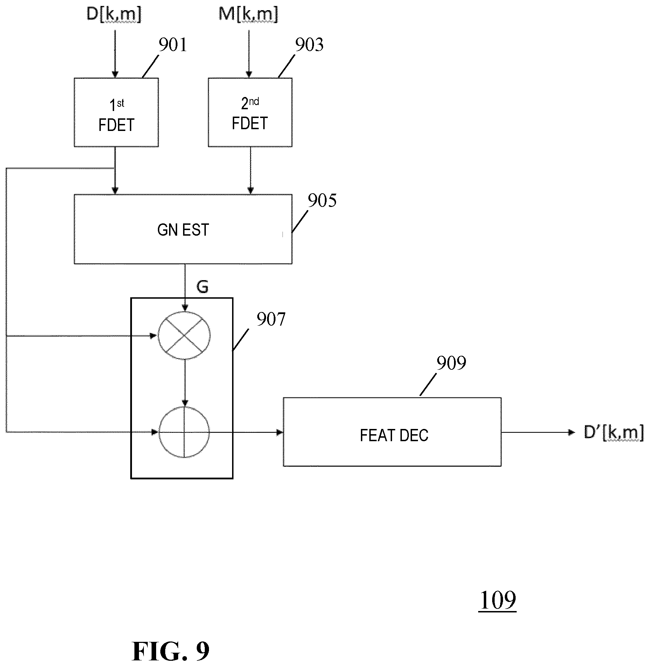

The envelope compensator 109 of FIG. 9 further comprises a trained artificial neural network, henceforth referred to as the adjustment estimation neural network 905, which is arranged to generate a set of feature scale factors based on the determined features. The adjustment estimation neural network has input nodes that receive the first and second set of features from the first feature determiner 901 and second feature determiner 903. It further has output nodes that provide set of feature scale factors.

The envelope compensator 109 of FIG. 9 further comprises an adjustment circuit 907 which is arranged to perform an adjustment of the first set of features, and in the example specifically apply the scale factors to the first set of features, to generate a first set of adjusted/compensated features. Specifically, each (or at least one or some) of the first set of features representing the frequency domain decorrelated signal are scaled based on the scale factor that is determined by the adjustment estimation neural network. Thus, the adjustment/scaling is performed in the feature domain and is a scaling of features rather than of the signal samples.

In the specific example, the features are scaled based on the generated scale factor and then summed with the original value, i.e. the total applied scaling is 1+G where G is the gain value determined by the adjustment estimation neural network for the given feature. Alternatively, the adjustment circuit 907 may consist of a simple non-linear layer, where the output is the non-linearly scaled weighted sum of the inputs.

The scaled feature values are then fed to a feature decoder 909 which is arranged to generate the envelope compensated frequency domain decorrelated signal from the first set of compensated features. Thus, after scaling/-compensation, the features representing the frequency domain decorrelated signal are fed to a feature decoder 909 which proceeds to generate output samples of the compensated frequency domain decorrelated signal.

The feature decoder 909 may in many embodiments be implemented as a trained artificial neural network. In particular, it has been found that an efficient construction of the compensated frequency domain decorrelated signal from the features is achieved using a suitably trained artificial neural network.

The approach provides a highly efficient and accurate envelope compensation in many embodiments and for many signals. The structure is particularly efficient for implementation using artificial neural networks and in particular the compensation being performed in the feature domain based on the evaluation by an artificial neural network of the features of both the frequency domain decorrelated signal and the frequency domain audio signal has been found to allow very efficient implementation as well as high performance.

In order to further elucidate the approach of the envelope compensator 109 of FIG. 9, the envelope re-instatement/compensation may as previously described be considered as:

$$d'[n] = \bar{d}[n] \cdot e_m[n]$$

The re-instated envelope decorrelated signal can be written in terms of the original,

$$d'[n] = d[n] \cdot \frac{e_m[n]}{e_d[n]}$$

If we divide $e_m[n]$ by $e_d[n]$ to produce a quotient of 1, then the remainder is $e_m[n] - e_d[n]$, and the output:

$$d'[n] = d[n] \cdot \left(1 + \frac{e_m[n] - e_d[n]}{e_d[n]}\right) = d[n] + d[n] \cdot \frac{e_m[n] - e_d[n]}{e_d[n]}$$

Replacing $\frac{e_m[n] - e_d[n]}{e_d[n]}$ with a learned gain or mask term $g[n]$ and moving to the feature domain, we get:

$$D'[k,m] = D[k,m] + D[k,m] \cdot G[k,m]$$

In some embodiments, additional processing may be applied to the gain ratio $\frac{e_m[n]}{e_d[n]}$ preventing large or near zero scaling factors. For example, a non linear function may be applied to maintain the ratio within a given range.

In the neural network architecture of FIG. 9, the mask term $g[n]$ may be determined by the operations of the first feature determiner 901, second feature determiner 903, and the adjustment estimation neural network 905. It may then be applied to the first set of features representing $d[n]$ and then added to the same input features. Decoding of the features via deconvolutional layers of the feature decoder 909 can then take place to produce $d'[n]$. The term in

$$g[n] = \frac{e_m[n] - e_d[n]}{e_d[n]}$$

can therefore be seen as a correction factor and is typically more amenable to modelling by neural network implementations compared to directly learning the scaling $\frac{e_m[n]}{e_d[n]}$

It will be appreciated that whereas the example specifically determines scale factors and adjust the features by scaling, other adjustments of the features are possible. For example, in some embodiments, the adjustment estimation neural network may be trained to determine offsets of features and the determined offsets may be added in an adjustment circuit that performs summation rather than scaling. It will also be appreciated by including the adjustment circuit operation in the training of the adjustment estimation neural network, such variations or alternatives may be realized by adapting the training process.

In some embodiments, the envelope compensation may be performed over the entire frequency range, and specifically compensation may be applied to all frequency subbands. However, in other embodiments, the envelope compensator 109 may be arranged to generate the envelope compensated frequency domain decorrelated signal by applying the time domain envelope compensation to only a subset of higher frequency subbands of the frequency domain decorrelated signal. Thus, specifically, in some cases, the envelope compensation may be limited to only higher frequency subbands, and specifically only to frequency subbands above a given threshold frequency.

This approach may in particular be combined with a hybrid frequency representation where the subbands may have different bandwidths. For example, as shown in FIG. 2, a time domain to frequency domain transform may apply a common frequency transform which generates a set of subbands having equal subbands. A number of lower frequency subbands may then be further frequency divided to generate subbands with a lower bandwidth. A delay may be introduced to the higher frequency subbands (to compensate for the processing time of further subdividing the low frequency subbands). In such examples, the envelope compensation may be applied to one or more of the higher frequency bands but not to any of the low frequency subbands that are further subdivided. The envelope compensation may in this case be performed in parallel to the delay of the high frequency bands. Thus, the envelope compensation may be performed on the higher frequency bands/signals before the delay. In many cases, the envelope compensation operation may be faster than the frequency subdivision and accordingly this approach may allow the envelope compensation to be performed without introducing any additional delay.

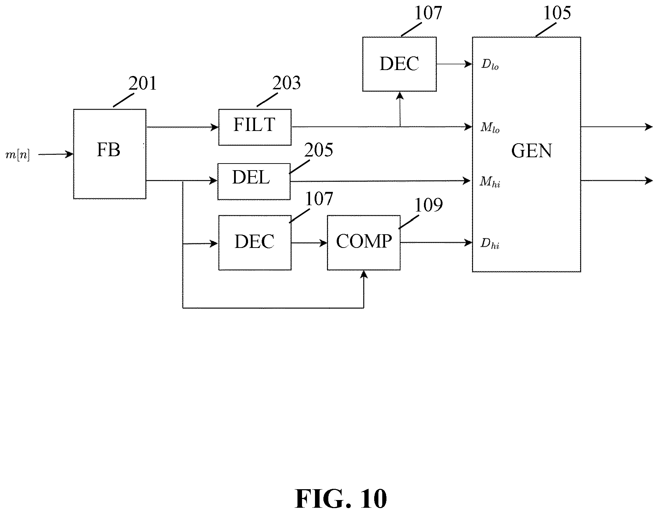

FIG. 10 shows an example of such an approach in the audio apparatus of FIG. 1 with the time domain to frequency transform function of FIG. 2.

The approach may exploit the realization that the fine detail of the temporal/time domain envelope is largely determined by the higher frequencies and that therefore the compensations may be focused on higher frequencies. This allows for a structure such as that of FIG. 10 to include envelope compensation without introducing additional delay in the signal path. In the example, the lower frequency bands include an extra frequency subdivision but no envelope compensation. The decorrelation is separately applied to respectively the higher and lower frequency paths.

For the higher bands, the decorrelator 107 is fed the signal prior to the delay compensation of the hybrid filter bank. Similarly, the envelope compensator 109 is performed in parallel to the delay of the signal path and as long as the required processing time for the decorrelation and envelope compensation is less than the delay of the extra frequency subdivision, the envelope compensation can be arranged to not add any additional delay to the signal path.

It will be appreciated that a number of variations are possible. The low frequency bands of the frequency domain decorrelated signal could be compensated using control data determined from the high frequency bands thereby reducing the delay of the signal path for the lower frequency bands. In some embodiments, the processing for e.g. the frequency bands may be asymmetric. For example, higher frequency bands both lookahead and lookback buffers may be used to estimate a sample, whereas the lower frequency bands may only use lookback buffers.

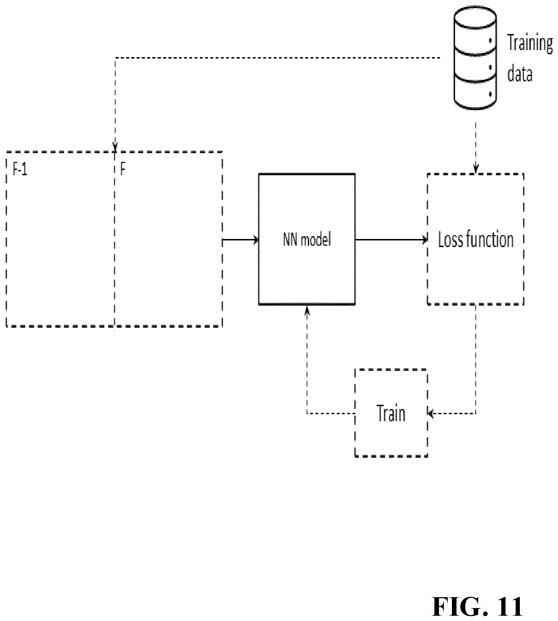

Artificial neural networks are adapted to specific purposes by a training process which is used to adapt/ tune/ modify the weights and other parameters (e.g. bias) of the artificial neural network. It will be appreciated that many different training processes and algorithms are known for training artificial neural networks. A training setup that may be used for the described artificial neural networks is illustrated in FIG. 11.

Typically, training is based on large training sets where a large number of examples of input data are provided to the network. Further, the output of the artificial neural network is typically (directly or indirectly) compared to an expected or ideal result. A cost function may be generated to reflect the desired outcome of the training process. In a typical scenario known as supervised learning, the cost (or loss) function often represents the distance between the prediction and the ground truth for a particular input data. Based on the cost function, the weights may be changed and by reiterating the process for the modified weights, the artificial neural network may be adapted towards a state for which the cost function is minimized.

Different approaches may be used to train the neural networks and in particular an overall training may seek to result in the output of the audio apparatus being a multichannel audio signal that most closely correspond to the original multichannel audio signal. Thus, the arrangement may be trained to provide a compensated frequency domain decorrelated signal that most effectively results in accurate reconstruction of the multichannel audio signal. In such a case, a cost function based on the difference between a generated multichannel audio signal and an original training multichannel audio signal may be used. In other cases, more specific training of an artificial neural network may be used. For example, the training of an artificial neural network of the envelope compensator 109 may be based on a cost function reflecting the difference between a time domain envelope of a generated compensated frequency decorrelated signal and the time domain envelope of a corresponding frequency domain audio signal. In yet other cases, even more specific training may be used where e.g. an artificial neural network of the first envelope estimator 601 is performed based on a cost function comparing a time domain envelope of the training frequency domain audio signal and the generated time domain envelope estimate. In some embodiments, general and joint training of multiple artificial neural networks may be performed (e.g. using a cost function evaluating the generated multichannel audio signal) and in other embodiments individual artificial neural networks may be individually trained.

In some embodiments, the cost function may e.g. compare the training target frequency domain signal (based on the pre-calculated time-domain signal with corrected/matching envelope) and the frequency domain signal produced by the envelope compensator 109.

In more detail, during a training step a neural network may have two different flows of information from input to output (forward pass) and from output to input (backward pass). In the forward pass, the data is processed by the neural network as described above while in the backward pass the weights are updated to minimize the cost function. Typically, such a backward propagation follows the gradient direction of the cost function landscape. In other words, by comparing the predicted output with the ground truth for a batch of data input, one can estimate the direction in which the cost function is minimized and propagate backward, by updating the weights accordingly. Other approaches known for training artificial neural networks include for example Levenberg-Marquardt algorithm, the conjugate gradient method, and the Newton method etc.

In the present case, training may specifically include a training set comprising a potentially large number of multichannel audio signals or corresponding downmix audio signals. The training sets may include audio signals representing a number of different audio sources including e.g. recording of videos, movies, telecommunications, etc. In some embodiments, the training data may even include non-audio data such as a training being performed in combination with training data from other sources, such as text data etc.

In some embodiments, training data may be multichannel audio signals in time segments corresponding to the processing time intervals of the artificial neural networks being trained, e.g. the number of samples in a training multichannel audio signal may correspond to a number of samples corresponding to the input nodes of the artificial neural network(s) being trained. Each training example may thus correspond to one operation of the artificial neural network(s) being trained. Usually, however, a batch of training samples is considered for each step to speed up and smoothen the training process. Furthermore, many upgrades to gradient descent are possible also to speed up convergence or avoid local minima in the cost function landscape.

For each training multichannel audio signal, a training processor may perform a downmix operation to generate a downmix audio signal and corresponding upmix parametric data. Thus, the encoding process that is applied to the multichannel audio signal during normal operation may also be applied to the training multichannel audio signal thereby generating a downmix and the upmix parametric data.

In addition, the training processor may in some embodiments generate a time domain envelope signal for the frequency domain audio signal.

The training downmix signals may be fed to the arrangement of the audio apparatus including the decorrelator 107 and the envelope compensator 109. An output from the neural network operation of the arrangement is then determined and a cost function is applied to determine a cost value for each training downmix audio signal and/or for the combined set of training downmix audio signals (e.g. an average cost value for the training sets is determined). The cost function may include various components.

Typically, the cost function will include at least one component that reflects how close a generated signal is to a reference signal, i.e. a so-called reconstruction error. In some embodiments the cost function will include at least one component that reflects how close a generated signal is to a reference signal from a perceptual point of view.

For example, in some embodiments, the time domain envelope for the compensated frequency decorrelated signal generated by the envelope compensator 109 for a given training downmix audio signal/ multichannel audio signal may be compared to the time domain envelope for that training downmix audio signal. The time domain envelope estimate signal may be determined by conversion to the time domain domain of a low pass filtered version of the signal. The resulting signals may be compared to determine the cost function. This process may be generated for all training sets to generate an overall cost function.

Based on the cost value, the training processor may adapt the weights of the artificial neural networks. For example, a back-propagation approach may be used. In particular, the training processor may adjust the weights of one or all of the artificial neural networks based on the cost value. For example, given the derivative (representing the slope) of the weights with respect to the cost function the weights values are modified to go in the direction of the slope. For a simple/minima account one can refer to the training of the perceptron (single neuron) in case of backward pass of a single data input.

The process may be iterated until the artificial neural networks are considered to be trained. For example, training may be performed for a predetermined number of iterations. As another example, training may be continued until the weights change be less than a predetermined amount. Also very common, a validation stop is implemented where the network is tested again a validation metric and stopped when reaching the expected outcome.

In some embodiments, the cost function may be arranged to reflect a difference between the training multi-channel audio signal and a multichannel audio signal generated by upmixing the downmix audio signal and the compensated frequency decorrelated signal. As previously mentioned, in other embodiments, the cost function may reflect differences in intermediate parameters or signals, such as the differences in the time domain envelopes of the frequency domain audio signal and the compensated frequency decorrelated signal. In some cases, the cost function may include contributions from a plurality of such comparisons.

In more detail, a cost function may consist of taking the (root) mean squared error between the artificial neural network's output frequency-domain output signal and the frequency-domain transformed training target time-domain decorrelator signal, where the training signal's time-domain envelope matches that of the audio signal.

The audio apparatus(s) may specifically be implemented in one or more suitably programmed processors. In particular, the artificial neural networks may be implemented in one more such suitably programmed processors. The different functional blocks, and in particular the artificial neural networks, may be implemented in separate processors and/or may e.g. be implemented in the same processor. An example of a suitable processor is provided in the following.

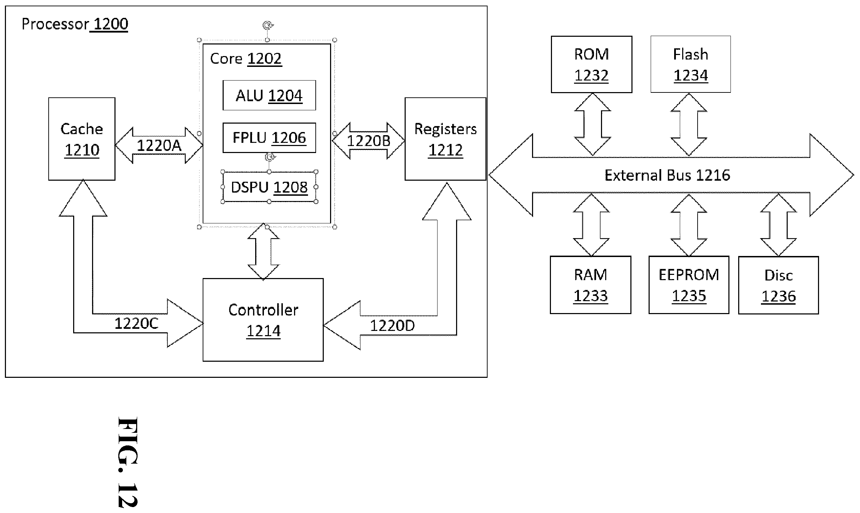

FIG. 12 is a block diagram illustrating an example processor 1200 according to embodiments of the disclosure. Processor 1200 may be used to implement one or more processors implementing an apparatus as previously described or elements thereof (including in particular one more artificial neural network). Processor 1200 may be any suitable processor type including, but not limited to, a microprocessor, a microcontroller, a Digital Signal Processor (DSP), a Field ProGrammable Array (FPGA) where the FPGA has been programmed to form a processor, a Graphical Processing Unit (GPU), an Application Specific Integrated Circuit (ASIC) where the ASIC has been designed to form a processor, or a combination thereof.

The processor 1200 may include one or more cores 1202. The core 1202 may include one or more Arithmetic Logic Units (ALU) 1204. In some embodiments, the core 1202 may include a Floating Point Logic Unit (FPLU) 1206 and/or a Digital Signal Processing Unit (DSPU) 1208 in addition to or instead of the ALU 1204.

The processor 1200 may include one or more registers 312 communicatively coupled to the core 1202. The registers 1212 may be implemented using dedicated logic gate circuits (e.g., flip-flops) and/or any memory technology. In some embodiments the registers 1212 may be implemented using static memory. The register may provide data, instructions and addresses to the core 1202.

In some embodiments, processor 1200 may include one or more levels of cache memory 1210 communicatively coupled to the core 1202. The cache memory 1210 may provide computer-readable instructions to the core 1202 for execution. The cache memory 1210 may provide data for processing by the core 1202. In some embodiments, the computer-readable instructions may have been provided to the cache memory 1210 by a local memory, for example, local memory attached to the external bus 1216. The cache memory 1210 may be implemented with any suitable cache memory type, for example, Metal-Oxide Semiconductor (MOS) memory such as Static Random Access Memory (SRAM), Dynamic Random Access Memory (DRAM), and/or any other suitable memory technology.

The processor 1200 may include a controller 1214, which may control input to the processor 1200 from other processors and/or components included in a system and/or outputs from the processor 1200 to other processors and/or components included in the system. Controller 1214 may control the data paths in the ALU 1204, FPLU 1206 and/or DSPU 1208. Controller 1214 may be implemented as one or more state machines, data paths and/or dedicated control logic. The gates of controller 1214 may be implemented as standalone gates, FPGA, ASIC or any other suitable technology.

The registers 1212 and the cache 1210 may communicate with controller 1214 and core 1202 via internal connections 1220A, 1220B, 1220C and 1220D. Internal connections may be implemented as a bus, multiplexer, crossbar switch, and/or any other suitable connection technology.

Inputs and outputs for the processor 1200 may be provided via a bus 1216, which may include one or more conductive lines. The bus 1216 may be communicatively coupled to one or more components of processor 1200, for example the controller 1214, cache 1210, and/or register 1212. The bus 1216 may be coupled to one or more components of the system.

The bus 1216 may be coupled to one or more external memories. The external memories may include Read Only Memory (ROM) 1232. ROM 1232 may be a masked ROM, Electronically Programmable Read Only Memory (EPROM) or any other suitable technology. The external memory may include Random Access Memory (RAM) 1233. RAM 1233 may be a static RAM, battery backed up static RAM, Dynamic RAM (DRAM) or any other suitable technology. The external memory may include Electrically Erasable Programmable Read Only Memory (EEPROM) 1235. The external memory may include Flash memory 1234. The External memory may include a magnetic storage device such as disc 1236. In some embodiments, the external memories may be included in a system.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc do not preclude a plurality. Reference signs in the claims are provided merely as a clarifying example shall not be construed as limiting the scope of the claims in any way.

**Claims**

1. An apparatus for generating a multichannel audio signal, the apparatus comprising:

   a receiver (101) arranged to receive a frequency domain audio signal;
   a decorrelator (107) arranged to generate a frequency domain decorrelated signal by applying a decorrelation to the frequency domain audio signal;
   an envelope compensator (109) arranged to generate an envelope compensated frequency domain decorrelated signal by applying a time domain envelope compensation to the frequency domain decorrelated signal, the time domain envelope compensation reducing a difference between a time domain envelope of the frequency domain audio signal and a time domain envelope of the frequency domain decorrelated signal, the envelope compensator (109) comprising at least one trained artificial neural network having input values determined from at least one of the frequency domain audio signal and the frequency domain decorrelated signal and generating time domain envelope compensation data for the time domain envelope compensation, the envelope compensated frequency domain decorrelated signal being dependent on the time domain envelope compensation data; and
   an output generator (105) arranged to generate the multichannel audio signal by upmixing from the frequency domain audio signal and the envelope compensated frequency domain decorrelated signal.

2. The apparatus of claim 1 wherein the at least one trained artificial neural network comprises a trained artificial neural network arranged to receive input values determined from the frequency domain audio signal and to generate time domain envelope compensation data indicative of a time domain envelope estimate for the frequency domain audio signal, the envelope compensator (109) being arranged to generate the envelope compensated frequency domain decorrelated signal in dependence on the time domain envelope estimate for the frequency domain audio signal.

3. The apparatus of claim 1 or 2 wherein the at least one trained artificial neural network comprises a trained artificial neural network arranged to receive input values determined from the frequency domain decorrelated signal and to generate time domain envelope compensation data indicative of a time domain envelope estimate for the frequency domain decorrelated signal, the envelope compensator (109) being arranged to generate the envelope compensated frequency domain decorrelated signal in dependence on the time domain envelope estimate for the frequency domain decorrelated signal.

4. The apparatus of any of the previous claims wherein the envelope compensator comprises:

a first envelope estimator (601) arranged to determine a time domain envelope estimate for the frequency domain audio signal;
a second envelope estimator (603) arranged to determine a time domain envelope estimate for the frequency domain decorrelated signal; and
wherein the at least one trained artificial neural network comprises a trained artificial neural network (605) arranged to receive input values determined from the time domain envelope estimate for the frequency domain audio signal and input values determined from the time domain envelope estimate for the frequency domain decorrelated signal, and to generate time domain envelope compensation data comprising samples of the envelope compensated frequency domain decorrelated signal.

5. The apparatus of any of the previous claims wherein at least one of the at least one trained artificial neural networks is arranged to receive input values determined from the frequency domain audio signal and input values determined from the frequency domain decorrelated signal and to generate time domain envelope compensation data to comprise samples of the envelope compensated frequency domain decorrelated signal.

6. The apparatus of any of the previous claims wherein the at least one trained artificial neural network is arranged to generate time domain envelope compensation data for a first time interval based on input values determined from samples of at least one of the frequency domain audio signal and the frequency domain decorrelated signal in a second time interval, the second time interval being different from the first time interval.

7. The apparatus of any of the previous claims wherein the envelope compensator (109) comprises:

a first feature determiner (901) arranged to determine a first set of features from the frequency domain decorrelated signal;
a second feature determiner (903) arranged to determine a second set of features from the frequency domain audio signal;
wherein the at least one trained artificial neural network comprises a trained artificial neural network arranged to generate a set of feature adjustment factors, the artificial neural network having inputs including the first set of features and the second set of features;
and the envelope compensator (109) further comprises:

a circuit (907) arranged to apply the adjustment factors to the first set of features to generate a first set of adjusted features; and
a feature decoder (909) arranged to generate the envelope compensated frequency domain decorrelated signal from the first set of adjusted features.

8. The apparatus of claim 7 wherein the feature decoder (909) comprises a trained artificial neural network having input nodes receiving the first set of adjusted features and output nodes providing samples of the envelope compensated frequency domain decorrelated signal.

9. The apparatus of claim 7 or 8 wherein the first feature determinator (901) comprises an artificial neural network having input nodes receiving samples of the frequency domain decorrelated signal and output nodes providing the first set of features.

10. The apparatus of any of claims 7 to 9 wherein the second feature determinator (903) comprises an artificial neural network having input nodes receiving samples of the frequency domain audio signal and output nodes providing the second set of features.

11. The apparatus of any previous claim wherein the at least one artificial neural network is trained using training data comprising a number of training frequency domain audio signals and a cost function dependent on a difference measure between time domain envelopes of the training frequency domain audio signals and time domain envelopes for compensated frequency domain decorrelated signals generated for the training frequency domain audio signals.

12. The apparatus of any of the previous claims wherein the at least one trained artificial neural network comprises an input convolutional layer receiving samples of the frequency domain audio signal and the frequency domain decorrelated signal and at least one fully connected hidden layer.

13. The apparatus of any previous claim wherein the envelope compensator (109) is arranged to generate the envelope compensated frequency domain decorrelated signal by applying the time domain envelope compensation to only a subset of higher frequency subbands of the frequency domain decorrelated signal.

14. A method of generating a multichannel audio signal, the method comprising:

receiving a frequency domain audio signal;
generating a frequency domain decorrelated signal by applying a decorrelation to the frequency domain audio signal;
generating an envelope compensated frequency domain decorrelated signal by applying a time domain envelope compensation to the frequency domain decorrelated signal, the time domain envelope compensation reducing a difference between a time domain envelope of the frequency domain audio signal and a time domain envelope of the frequency domain decorrelated signal, the time domain envelope compensation including at least one trained artificial neural network having input values determined from at least one of the frequency domain audio signal and the frequency domain decorrelated signal and generating time domain envelope compensation data for the time domain envelope compensation, the envelope compensated frequency domain decorrelated signal being dependent on the time domain envelope compensation data; and
generating the multichannel audio signal by upmixing from the frequency domain audio signal and the envelope compensated frequency domain decorrelated signal.

15. A computer program product comprising computer program code means adapted to perform all the steps of claim 14 when said program is run on a computer.

FIG. 1

**FIG. 2**

**FIG. 3**

$$l = \max\left(0, \sum_n w_n x_n\right)$$

**FIG. 4**

$S$

$L$ | $M[k, m]$ |

NN 501

$L$ | $D[k, m]$ |

$S$

1

$L$ | $D'[k, m]$ |

109

**FIG. 5**

**FIG. 6**

**FIG. 7**

FC layer

Flatten

W

$S$

$L$

$2 \cdot L \cdot S$

$H_1$

$N$

109

**FIG. 8**

D[k,m]          M[k,m]

901             903

1st             2nd
FDET            FDET

905

GN EST

G

907

909

FEAT DEC        → D'[k,m]

109

**FIG. 9**

**FIG. 10**

**FIG. 11**

**FIG. 12**

## EUROPEAN SEARCH REPORT

**Application Number**

EP 23 21 8098

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2006/239473 A1 (KJORLING KRISTOFER [SE] ET AL) 26 October 2006 (2006-10-26)<br>* paragraph [0011] *<br>* paragraph [0060] – paragraph [0076]; figures 1a,2a *<br>* paragraph [0087] – paragraph [0090]; figure 4a *<br>* paragraph [0099] – paragraph [0102] *<br>* paragraph [0121] – paragraph [0125]; figures 7a,7b *<br>* claims 1,2,15,4 * | 1-15 | INV.<br>G10L19/008<br>H04S1/00<br>H04S3/00<br>H04S7/00<br><br>ADD.<br>G06N3/02 |
| A | US 2009/319282 A1 (ALLAMANCHE ERIC [DE] ET AL) 24 December 2009 (2009-12-24)<br>* paragraph [0101] – paragraph [0126]; figures 10-16 * | 1-15 | |
| A | US 2020/221242 A1 (KIM KICHUL [KR] ET AL) 9 July 2020 (2020-07-09)<br>* paragraph [0316] – paragraph [0432]; figure 10 * | 1-15 | TECHNICAL FIELDS SEARCHED (IPC) |
| A | US 2009/234657 A1 (TAKAGI YOSHIAKI [JP] ET AL) 17 September 2009 (2009-09-17)<br>* paragraph [0053] – paragraph [0074]; figure 5 * | 1-15 | G10L<br>H04S<br>G06N |
| A | WO 2022/189481 A1 (FRAUNHOFER GES FORSCHUNG [DE]; UNIV FRIEDRICH ALEXANDER ER [DE]) 15 September 2022 (2022-09-15)<br>* page 7, line 13 – page 8, line 7; figure 1 *<br>* page 10, line 4 – page 10, line 25; figure 2 *<br>* page 18, line 14 – page 20, line 31; figures 9,10 * | 1-15 | |

The present search report has been drawn up for all claims

| Place of search | Date of completion of the search | Examiner |
|---|---|---|
| Munich | 6 May 2024 | Virette, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 576 071 A1

**ANNEX TO THE EUROPEAN SEARCH REPORT
ON EUROPEAN PATENT APPLICATION NO.**

EP 23 21 8098

This annex lists the patent family members relating to the patent documents cited in  the above-mentioned European search report.
The members are as contained in the European Patent Office EDP file on
The European Patent Office is in no way liable for these particulars which are merely given for the purpose of information.

06-05-2024

| Patent document cited in search report | | | Publication date | Patent family member(s) | | | Publication date |
|---|---|---|---|---|---|---|---|
| US 2006239473 | A1 | | 26-10-2006 | AT | E421845 | T1 | 15-02-2009 |
| | | | | CN | 101138274 | A | 05-03-2008 |
| | | | | CN | 102163429 | A | 24-08-2011 |
| | | | | EP | 1829424 | A1 | 05-09-2007 |
| | | | | HK | 1118168 | A1 | 30-01-2009 |
| | | | | HK | 1160980 | A1 | 17-08-2012 |
| | | | | JP | 4804532 | B2 | 02-11-2011 |
| | | | | JP | 2008536183 | A | 04-09-2008 |
| | | | | KR | 20070102738 | A | 19-10-2007 |
| | | | | MY | 144377 | A | 15-09-2011 |
| | | | | TW | I338446 | B | 01-03-2011 |
| | | | | US | 2006239473 | A1 | 26-10-2006 |
| | | | | WO | 2006108543 | A1 | 19-10-2006 |
| US 2009319282 | A1 | | 24-12-2009 | AT | E413792 | T1 | 15-11-2008 |
| | | | | AU | 2005299070 | A1 | 04-05-2006 |
| | | | | BR | PI0516392 | A | 02-09-2008 |
| | | | | CA | 2583146 | A1 | 04-05-2006 |
| | | | | CN | 101044794 | A | 26-09-2007 |
| | | | | CN | 101853660 | A | 06-10-2010 |
| | | | | EP | 1803325 | A1 | 04-07-2007 |
| | | | | ES | 2317297 | T3 | 16-04-2009 |
| | | | | HK | 1104412 | A1 | 11-01-2008 |
| | | | | IL | 182235 | A | 31-10-2011 |
| | | | | JP | 4625084 | B2 | 02-02-2011 |
| | | | | JP | 2008517334 | A | 22-05-2008 |
| | | | | KR | 20070061882 | A | 14-06-2007 |
| | | | | NO | 339587 | B1 | 09-01-2017 |
| | | | | PL | 1803325 | T3 | 30-04-2009 |
| | | | | PT | 1803325 | E | 13-02-2009 |
| | | | | RU | 2384014 | C2 | 10-03-2010 |
| | | | | TW | I330827 | B | 21-09-2010 |
| | | | | US | 2006085200 | A1 | 20-04-2006 |
| | | | | US | 2009319282 | A1 | 24-12-2009 |
| | | | | WO | 2006045373 | A1 | 04-05-2006 |
| US 2020221242 | A1 | | 09-07-2020 | CN | 111432273 | A | 17-07-2020 |
| | | | | EP | 3680897 | A1 | 15-07-2020 |
| | | | | KR | 20200086064 | A | 16-07-2020 |
| | | | | US | 2020221242 | A1 | 09-07-2020 |
| | | | | WO | 2020145659 | A1 | 16-07-2020 |
| US 2009234657 | A1 | | 17-09-2009 | CN | 101253556 | A | 27-08-2008 |
| | | | | EP | 1921606 | A1 | 14-05-2008 |
| | | | | JP | 4918490 | B2 | 18-04-2012 |
| | | | | JP | WO2007026821 | A1 | 26-03-2009 |

EPO FORM P0459

For more details about this annex : see Official Journal of the European Patent Office, No. 12/82

page 1 of 2

**ANNEX TO THE EUROPEAN SEARCH REPORT**
**ON EUROPEAN PATENT APPLICATION NO.**
EP 23 21 8098

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2024

| Patent document cited in search report | Publication date | Patent family member(s) | | Publication date |
|---|---|---|---|---|
| | | KR | 20080039463 A | 07-05-2008 |
| | | US | 2009234657 A1 | 17-09-2009 |
| | | WO | 2007026821 A1 | 08-03-2007 |
| WO 2022189481 A1 | 15-09-2022 | AU | 2022233253 A1 | 21-09-2023 |
| | | BR | 112023018021 A2 | 03-10-2023 |
| | | CA | 3211264 A1 | 15-09-2022 |
| | | EP | 4305617 A1 | 17-01-2024 |
| | | JP | 2024510177 A | 06-03-2024 |
| | | KR | 20230160840 A | 24-11-2023 |
| | | TW | 202242851 A | 01-11-2022 |
| | | US | 2023421979 A1 | 28-12-2023 |
| | | WO | 2022189481 A1 | 15-09-2022 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Advances in Parametric Coding for High-Quality Audio. **E. SCHUIJERS** ; **W. OOMEN** ; **B. DEN BRINKER** ; **J. BREEBAART**. 114th AES Convention. The Netherlands, 2003
- **E. SCHUIJERS** ; **J. BREEBAART** ; **H. PUMHAGEN** ; **J. ENGDEGÅRD**. Low Complexity Parametric Stereo Coding. *116th AES, Berlin, Germany*, 2004

- **XAVIER GLOROT** ; **ANTOINE BORDES** ; **YOSHUA BENGIO**. Proceedings of the Fourteenth International Conference on Artificial Intelligence and Statistics. *PMLR*, 2011, vol. 15, 315-323
- **OORD** ; **AARON VAN DEN** ; **SANDER DIELEMAN** ; **HEIGA ZEN** ; **KAREN SIMONYAN** ; **ORIOL VINYALS** ; **ALEX GRAVES** ; **NAL KALCHBRENNER** ; **ANDREW SENIOR** ; **KORAY KAVUKCUOGLU**. Wavenet: A generative model for raw audio. *arXiv preprint*, 2016